# EUROPEAN PATENT SPECIFICATION

(11) **EP 2 680 348 B1**
(45) Date of publication and mention of the grant of the patent: **05.08.2015**
(21) Application number: 13171649.0
(22) Date of filing: 12.06.2013
(51) Int. Cl.: H01M 4/505, C01G 45/00, C01G 45/02, C01G 51/00, C01G 51/04, C01G 53/00, C01G 53/04, H01M 4/525, H01M 10/052

(54) **Positive active material for lithium secondary battery, method for production thereof, electrode for lithium secondary battery and lithium secondary battery**
Positives Aktivmaterial für eine Lithium-Sekundärbatterie, Herstellungsverfahren davon, Elektrode für eine Lithium-Sekundärbatterie und Lithium-Sekundärbatterie
Matériau positif actif pour batterie secondaire au lithium, son procédé de fabrication, électrode de batterie secondaire au lithium et batterie secondaire au lithium

(30) Priority: 29.06.2012 JP 2012146295; 14.03.2013 JP 2013051268
(43) Date of publication of application: 01.01.2014
(73) Proprietor: GS Yuasa International Ltd., Kisshoin, Minami-ku, Kyoto-shi, Kyoto 601-8520 (JP)
(72) Inventor: ENDO, Daisuke, Kyoto, 601-8520 (JP); MURAMATSU, Hiromasa, Kyoto, 601-8520 (JP)
(74) Representative: Vossius & Partner Patentanwälte Rechtsanwälte mbB

(56) References cited:
- EP-A1- 2 692 693
- WO-A1-2011/161755
- WO-A1-2012/039413

## Description

The present invention relates to a positive active material for a lithium secondary battery, a method for production thereof, an electrode for a lithium secondary battery which contains the positive active material, and a lithium second battery including the electrode.

Currently, nonaqueous electrolyte secondary batteries represented by lithium ion secondary batteries, particularly lithium secondary batteries, are widely mounted on portable terminals, and so on. For these nonaqueous electrolyte secondary batteries, principally LiCoO₂ is used as a positive active material. However, the discharge capacity of LiCoO₂ is about 120 to 130 mAh/g.

As a positive active material for a lithium secondary battery, a solid solution of LiCoO₂ and other compounds is known. Li[Co₁₋₂ₓNiₓMnₓ] O₂ (0 < x ≤ 1/2), a solid solution having an α-NaFeO₂-type crystal structure, which was formed of three components: LiCoO₂, LiNiO₂ and LiMnO₂, was published in 2001. LiNi_{1/2}Mn_{1/2}O₂ or LiCo_{1/3}Ni_{1/3}Mn_{1/3}O₂ that is one example of the aforementioned solid solution has a discharge capacity of 150 to 180 mAh/g, and is also excellent in terms of charge-discharge cycle performance.

In contrast with so called a "LiMeO₂-type" active material as described above, so called a "lithium-excess-type" active material is known in which the composition ratio Li/Me of lithium (Li) to the ratio of a transition metal (Me) is greater than 1, with Li/Me being, for example, 1.25 to 1.6 (see, for example, U.S No. 6,677,082, US No. 7,135,252, JP-A-10-106543 and JP-A-2010-86690). This material can be denoted as Li_{1+α}Me_{1-α}O₂ (α > 0). Here, β = (1 + α)/(1 - α) if the composition ratio Li/Me of lithium (Li) to the ratio of a transition metal (Me) is β, and therefore α = 0.2 when Li/Me is 1.5.

US No. 7,135,252 and US No. 7,135,252 describe an active material for a lithium secondary battery, which has a general formula of xLiMO₂·(1-x)Li₂M'O₃(0 < x < 1), and also describe that M is one selected from Mn, Co and Ni and that M' is Mn, and show that the active material enriched in Li has a stabilized crystal structure, and by using this active material, a lithium secondary battery having a high discharge capacity is obtained.

JP-A-10-106543 describes "a lithium battery comprising a positive active material which is formed of a composite oxide having a composition represented by Li_{X}Me_{Y}A_{(1-Y)}O_{(1+X)} (where 1.3 ≤ X ≤ 2.5, 0.5 ≤ Y ≤ 0.999) where Me is at least one transition metal selected from 7A and 8A groups of the periodic table, Mt is a transition metal different from Me, and A is at least one element selected from the group consisting of Mt, Na, K, Rb, Cs, Al, Ga, In, Tl, B, Mg, Ca, Sr, Ba and Pb, and having a hexagonal crystal structure" (claim 1). The document shows that the positive active material enriched in Li has a stabilized crystal structure, and a lithium battery having a high energy density is obtained by using this positive active material. The document also shows as Example a positive active material wherein x is 1.3, Me is Mn and A is Co.

JP-A-2010-86690 describes the invention of "an active material for a lithium secondary battery comprising a solid solution of a lithium transition metal composite oxide having an α-NaFeO₂-type crystal structure, wherein the composition ratio of Li, Co, Ni and Mn contained in the solid solution satisfies Li_{1+1/3x}Co_{1-x-y}Ni_{y/2}Mn_{2x/3+y/2} (x + y ≤ 1, 0 ≤ y, 1 - x - y = z), (x, y, z) is represented by a value present on the line of or within a heptagon ABCDEFG having point A (0.45, 0.55, 0), point B (0.63, 0.37, 0), point C (0.7, 0.25, 0.05), point D (0.67, 0.18, 0.15), point E (0.75, 0, 0.25), point F (0.55, 0, 0.45) and point G (0.45, 0.2, 0.35) as apexes, in a Li[Li_{1/3}Mn_{2/3}] O₂(x)-LiNi_{1/2}Mn_{1/2}O₂(y)-LiCoO₂(z)-system triangular phase diagram, and the intensity ratio of the diffraction peak of the (003) line and the (104) line in X-ray diffraction measurement is I₍₀₀₃)/I₍₁₀₄) ≥ 1.56 before charge-discharge, and I₍₀₀₃₎/I₍₁₀₄₎ > 1 at the end of discharge" (claim 1). The document shows that by using the active material enriched in Li, a lithium secondary battery, which has a high discharge capacity, and particularly has a high discharge capacity in a potential range of 4.3 V or less, is obtained.

On the other hand, it is also known that a positive active material for a lithium secondary battery, which contains a lithium transition metal composite oxide formed of Li and transition metal elements (Co, Ni, Mn and the like) contains an alkali component (see JP-A-2011-124086, JP-A-2009-140787 and WO 2012/039413).

JP-A-2011-124086 describes the invention of "a positive active material for a lithium secondary battery which comprises a lithium composite oxide represented by the following formula (1): Li₍ₓ₎Ni_{(1-a-b)}Co₍ₐ₎Mn_{(b)}O₂ (1) (where x is 0.98 ≤ x ≤ 1.20, a is 0 < a ≤ 0.5, and b is 0 < b ≤ 0.5), wherein the amount of residual alkali present on the surface part of a primary particle is 4000 ppm or less, and the amount of sulfate radicals present on the surface part of the primary particle is 500 to 11000 ppm." (claim 1), and "a positive active material for a lithium secondary battery which is obtained by a first sintering step of sintering at 950°C or lower a sintering raw material mixture containing a lithium compound, a nickel compound, a cobalt compound and a manganese compound to obtain a lithium composite oxide represented by the following formula (I): Li₍ₓ₎Ni_{(1-a-b)}Co₍ₐ₎Mn_{(b)}O₂ (1) (where x is 0.98 ≤ x ≤ 1.20, a is 0 < a ≤ 0.5, and b is 0 < b ≤ 0.5); an aqueous sulfate solution treatment step of washing and contacting with an aqueous sulfate solution the lithium composite oxide obtained in the first sintering step and represented by the general formula (1), so that an aqueous sulfate solution treatment product is obtained; and a second sintering step of sintering the aqueous sulfate solution treatment product at 400 to 800°C to obtain a positive active material for a lithium secondary battery." (claim 4). An object of the invention is to "provide a lithium nickel cobalt manganese-based composite oxide which has a reduced amount of residual alkali present on the surface part of a primary particle and is excellent in cycle performance" (paragraph [0011]).

JP-A-2011-124086 describes that "for the amount of residual alkali present on the surface part of a primary particle of a positive active material, 5 g of a sample and 100 g of ultrapure water were weighed and taken in a beaker, and dispersed at 25°C for 5 minutes using a magnetic stirrer; then, the dispersion was filtered, 30 ml of the filtrate was titrated with 0.1 N-HCl by an automatic titrator (model: COMTITE-2500), and the amount of residual alkali present in the sample (value obtained by measuring the amount of lithium and calculating it into the amount of lithium carbonate) was calculated." (paragraph [0103]).

JP-A-2009-140787 describes the invention of "a positive active material used in a nonaqueous electrolyte secondary battery, wherein the positive active material is a lithium-nickel-cobalt-manganese composite oxide, and the lithium-nickel-cobalt-manganese composite oxide contains tungsten and niobium." (claim 1) and "the positive active material according to any one of claims 1 to 3, wherein the content of the water-soluble alkali contained in the lithium-nickel-cobalt-manganese composite oxide is 0.2 wt% or less." (claim 4). An object of the invention is to "provide a positive active material which has an excellent power characteristic and generates a reduced amount of gas, and a battery using the positive active material" (paragraph [0009]).

JP-A-2009-140787 also describes that "50 ml of pure water is added to 10 g of a positive active material, and the resulting mixture is stirred for an hour, and then filtered; the filtrate is diluted to an appropriate concentration, followed by adding phenolphthalein as an indicator, and carrying out titration with a H₂SO₄ solution; the weight ratio of lithium hydroxide to the positive active material from the result of titration on the presumption that the alkali neutralized with the H₂SO₄ solution is all lithium hydroxide; and this value is defined as a content of water-soluble alkali." (paragraph [0056]).

International Publication No. WO 2012/039413 describes the invention of "an active material for a lithium secondary battery, comprising a solid solution of a sodium-containing lithium transition metal composite oxide having an α-NaFeO₂-type crystal structure, wherein the chemical composition formula of the solid solution satisfies Li_{i+x-y}Na_{y}CoₐNi_{b}Mn_{c}O_{2+d} (0 < y ≤ 0.1, 0.4 ≤ c ≤ 0.7, x + a + b + c = 1, 0.1 ≤ x ≤ 0.25, -0.2 ≤ d ≤ 0.2), the active material has an X-ray diffraction pattern attributable to a hexagonal crystal (space group P3₁12), and in the Miller index hkl, the half width of the diffraction peak of the (003) is 0.30° or less and the half width of the diffraction peak of the (114) line is 0.50° or less" (claim 1). The document shows that according to the invention, "an active material for a lithium secondary battery, which has a high initial efficiency and a high discharge capacity, and particularly has a high discharge capacity at a low temperature, can be provided" (paragraph [0038]). Also, it is shown as Example that the content of Na (value of y described above) is set at 0.01 to 0.1 mol (see Table 1) by a method using a coprecipitation hydroxide precursor.

The discharge capacity of so called a "lithium-excess-type" active material as described above is generally higher than that of so called a "LiMeO₂-type" active material. However, a lithium secondary battery using a "lithium-excess-type" active material as a positive active material has such a problem that high-rate discharge performance is not sufficient.

The present invention solves the above-mentioned problem, and an object thereof is to provide a positive active material for a lithium secondary battery which has a high discharge capacity and is excellent in high-rate discharge performance, and a lithium secondary battery using the positive active material.

The present invention relates to a positive active material for a lithium secondary battery comprising a lithium transition metal composite oxide having an α-NaFeO₂-type crystal structure and represented by the composition formula of Li_{1+α} Me_{1-α}O₂(Me is a transition metal including Co, Ni and Mn and (1 + α)/( 1 - α ) is 1.25 to 1.4), wherein the positive active material contains Na in an amount of 1900 ppm to 6000 ppm by weight, and has a 50% particle size (D50) of 5 µm or less in particle size distribution measurement.

A method for production of the positive active material for a lithium secondary battery according to the present invention includes a hydroxide of a transition metal including Co, Ni and Mn as a precursor for synthesis of the lithium transition metal composite oxide.

The method for production of a positive active material for a lithium secondary battery according to the present invention includes mixing a sodium compound together with a lithium compound to the hydroxide precursor of the transition metal including Co, Ni and Mn in a sintering step for synthesis of the lithium transition metal composite oxide.

An electrode for a lithium secondary battery according to the present invention includes the positive active material for a lithium secondary battery described above.

Additionally, a lithium secondary battery according to the present invention includes the electrode for a lithium secondary battery described above.

According to the present invention, a lithium secondary battery, which includes a positive active material containing a novel lithium transition metal composite oxide and which has a high discharge capacity and is excellent high-rate discharge performance, can be provided.

The composition of a lithium transition metal composite oxide contained in an active material for a lithium secondary battery according to the present invention can be denoted as Li_{1+α}Me_{1-α}O₂ (α > 0) which contains a transition metal element Me including Co, Ni and Mn as well as Li. The lithium transition metal composite oxide is so called a "lithium-excess type" which has a high discharge capacity.

The ratio of elements such as Co, Ni and Mn which form a transition metal element that forms the lithium transition metal composite oxide can be arbitrarily selected according to required characteristics.

In the present invention, the molar ratio of Li to the transition metal element Me (Li / Me), which is represented by (1 + α) / (1 - α) in the composition formula of Li_{1+α}Me_{1-α}O₂, is 1.25 to 1.4 to obtain a lithium secondary battery which has a particularly high discharge capacity and is excellent in high rate discharge characteristics.

The molar ratio of Co to the transition metal element Me (Co/Me) is preferably 0.02 to 0.23, more preferably 0.04 to 0.21, most preferably 0.06 to 0.17, to obtain a lithium secondary battery which has a high discharge capacity and is excellent in initial charge-discharge efficiency.

The molar ratio of Mn to the transition metal element Me (Mn/Me) is preferably 0.63 to 0.72, more preferably 0.65 to 0.71, to obtain a lithium secondary battery which has a high discharge capacity and is excellent in initial charge-discharge efficiency.

In the present invention, the lithium transition metal composite oxide is represented by the composition formula of Li_{1+α}Me_{1-α}O₂ (Me is a transition metal including Co, Ni and Mn and α > 0) contains Na in an amount of 1900 ppm or more and 6000 ppm or less). High-rate discharge performance is not sufficiently improved if the content of Na is less than 1900 ppm, and high-rate discharge performance is deteriorated if the content of Na is more than 8000 ppm. The content of Na is preferably 3000 ppm or more and 6000 ppm or less for improving high-rate discharge performance.

For adjusting the content of Na to the range described above, a method in which in a step of preparing a hydroxide precursor as described later, a sodium compound such as sodium hydroxide is used as a neutralizer, so that Na remains in a washing step, and/or a method in which in a subsequent sintering step, a sodium compound such as sodium carbonate is added can be employed.

In the present invention, the hydroxide precursor of the positive active material for a lithium secondary battery contains Na in an amount of 1900 ppm or more, or Na compound is added to the hydroxide precursor containing Na in an amount of 500 ppm or more, Na content becomes 1900 ppm or more.

Residual Na in the neutralization/washing step during preparation of the precursor may act as a primary particle growth suppressing agent in a step of sintering so called a "lithium-excess-type" lithium transition metal composite oxide, and the electrode characteristic of a lithium secondary battery including the lithium transition metal composite oxide as a positive active material may be improved.

The lithium transition metal composite oxide of the present invention is represented by the general formula described above, is a composite oxide essentially composed of Li, Co, Ni and Mn, and contains a small amount of Na, but inclusion of a small amount of other metals, such as alkali metals other than Na, alkali earth metals such as Mg and Ca and transition metals represented by 3d transition metals such as Fe and Zn within the bounds of not impairing the effect of the present invention, is not excluded.

The lithium transition metal composite oxide according to the present invention has an α-NaFeO₂ structure. The lithium transition metal composite oxide after synthesis (before charge-discharge is performed) is attributed to the space group P3₁12 or R3-m. Among them, in those attributed to the space group P3₁12, a superlattice peak (peak found in a (Li[Li_{1/3}Mn_{2/3}]O₂-type monoclinic crystal) is observed at around 2θ=21° on an X-ray diffraction pattern using a CuKα bulb. However, when charge is carried out at least once, so that Li in the crystal is deintercalated, the symmetry of the crystal is changed, and consequently the superlattice peak disappears, and the lithium transition metal composite oxide is attributed to the space group R3-m. Here, P3₁12 is a crystal structure model in which atom positions at 3a, 3b and 6c sites in R3-m are subdivided, and the P3₁12 model is employed when there is orderliness in atom arrangement in R3-m. Properly speaking, "R3-m" should be written with a bar "-" added above "3" of "R3m".

The lithium transition metal composite oxide according to the present invention is attributed to the space group P3₁12 or R3-m of the hexagonal crystal, and preferably the half width of the diffraction peak at 2θ = 18.6° ± 1° is 0.20° to 0.27° or/and the half width of the diffraction peak at 2θ = 44.1° ± 1° is 0.26° to 0.39° on an X-ray diffraction pattern using a CuKα bulb. In this way, the discharge capacity of the positive active material can be increased. The diffraction peak at 2θ = 18.6° ± 1° is indexed to the (003) line in the mirror index hkl for space groups P3₁12 and R3-m, and the diffraction peak at 2θ = 44.1° ± 1° is indexed to the (114) line for the space group P3₁12 and to the (104) line for the space group R3-m, respectively.

In the present invention, the positive active material for a lithium secondary battery and the hydroxide precursor thereof have a 50% particle size (D50) of 5 µm or less in particle size distribution measurement. When the lithium transition metal composite oxide is prepared from a hydroxide precursor, the particle size can be reduced as compared to a case where it is prepared from a carbonate precursor, and one having a particle size of 5 µm or less is obtained. The term "5 µm or less" in the present invention does not include particles made to have a particle size of "5 µm or less" by grinding particles having a large particle size, for example, 8 to 10 µm. However, lightly grinding or crushing particles for equalizing particle sizes is not excluded.

Next, a method for producing the active material for a lithium secondary battery according to the present invention will be described.

The active material for a lithium secondary battery of the present invention can be obtained basically by preparing a raw material which contains, in accordance with the composition of an intended active material (oxide), metal elements (Li, Mn, Co, Ni and Na) that forms the active material, and sintering the raw material. However, it is preferable that the Li raw material be charged in an excessive amount by about 1 to 5% in anticipation of loss of a part of the Li raw material during sintering.

For preparing an oxide having an intended composition, so called a "solid state method" in which salts of Li, Co, Ni, Mn and Na, respectively, are mixed and sintered, and a "coprecipitation method" in which a coprecipitation precursor with Co, Ni and Mn existing in one particle is prepared beforehand, a Li salt and a Na salt are mixed and sintered therewith are known. In a synthesis process by the "solid state method", it is difficult to obtain a sample with the elements homogeneously distributed in one particle because Mn in particular is hard to be homogeneously solid soluted in Co and Ni. In literatures and the like, a large number of attempts to solid-dissolve Mn in a part of Ni and Co by the solid phase method have been hitherto made (LiNi₁₋ₓMnₓO₂, etc.), but a homogeneous phase is more easily obtained at an element level by selection of the "coprecipitation method". Thus, in Examples described later, the "coprecipitation method" is employed.

For preparing a coprecipitation precursor, it is very important to establish an inert atmosphere in a solution from which the coprecipitation precursor is to be obtained. Among Co, Ni and Mn, Mn is easily oxidized, so that it is not easy to prepare a coprecipitation hydroxide with Co, Ni and Mn homogeneously distributed in a divalent state, and therefore homogeneous mixing of Co, Ni and Mn at an element level tends to be incomplete. Particularly in the composition range in the present invention, the ratio of Mn is high as compared to the ratios of Co and Ni, and therefore it is particularly important to remove dissolved oxygen in an aqueous solution. Examples of the method for removing dissolved oxygen include a method in which a gas containing no oxygen is bubbled. The gas containing no oxygen is not limited, but a nitrogen gas, an argon gas, carbon dioxide (CO₂) or the like can be used. A reducing agent such as hydrazine may also be included in an aqueous solution.

pH in the step of producing a precursor by coprecipitating in a solution a compound containing Co, Ni and Mn is not limited, but can be set at 10.5 to 14 when the coprecipitation precursor is prepared as a coprecipitation hydroxide precursor. It is preferable to control pH for increasing the tap density. By setting pH at 11.5 or less, it can be ensured that the tap density is 1.00 g/cm³ or more, so that high-rate discharge performance can be improved. Further, by setting pH at 11.0 or less, the particle growth rate can be accelerated, so that the stirring duration after completion of dropwise addition of a raw material aqueous solution can be reduced.

The coprecipitation precursor is preferably a compound with Mn, Ni and Co mixed homogeneously. In the present invention, the coprecipitation precursor is preferably a hydroxide for densifying the interior of the positive active material, making it possible to reduce the particle size, and preventing the active material from attaching to a roll at the time of pressing an electrode. A precursor having a higher bulk density can also be prepared by using a crystallization reaction or the like using a complexing agent. At this time, by mixing and sintering with a Li source and a Na source, an active material having a high density and a small specific surface area can be obtained, and therefore the energy density per electrode area can be improved.

Examples of the raw material of the coprecipitation hydroxide precursor may include manganese oxide, manganese carbonate, manganese sulfate, manganese nitrate and manganese acetate as a Mn compound, nickel hydroxide, nickel carbonate, nickel sulfate and nickel acetate as a Ni compound, and cobalt sulfate, cobalt nitrate and cobalt acetate as a Co compound.

In the present invention, a reaction crystallization method for obtaining a coprecipitation hydroxide precursor by adding dropwise a raw material aqueous solution of the coprecipitation precursor into a reaction tank kept alkaline is employed. Here, a neutralizer is used, and in the present invention, sodium hydroxide is preferably used. The possibility that Na is excessively removed in a subsequent washing step can be reduced by using sodium hydroxide rather than a mixture of sodium hydroxide and lithium hydroxide as shown in Example described later.

The rate of dropwise addition of the raw material aqueous solution significantly influences homogeneity of the element distribution within one particle of the coprecipitation precursor generated. Particularly, Mn is hard to form a homogeneous element distribution with Co and Ni, and therefore requires care. For the preferred dropwise addition rate, it depends on the size of the reaction tank, stirring conditions, pH, the reaction temperature and so on, but is preferably 30 ml/min or less. For increasing the discharge capacity, the dropwise addition rate is more preferably 10 ml/min or less, most preferably 5 ml/min or less.

When a complexing agent is present in the reaction tank, and certain convection conditions are applied, rotation and revolution in a stirring tank, of particles are promoted by further continuing stirring after completion of dropwise addition of the raw material aqueous solution, and in this process, particles are grown stepwise into a concentric circular sphere while colliding with one another. That is, coprecipitation precursor is formed through reactions in two stages, i.e. a metal complex formation reaction when the raw material aqueous solution is added dropwise into the reaction tank and a precipitate formation reaction that occurs during retention of the metal complex in the reaction tank. Therefore, by appropriately selecting a time during which stirring is further continued after completion of dropwise addition of the raw material aqueous solution, a coprecipitation precursor having a desired particle size can be obtained.

For the preferred stirring duration time after completion of dropwise addition of the raw material aqueous solution, it depends on the size of the reaction tank, stirring conditions, pH, the reaction temperature and so on, but is, for example, preferably 0.5 h or more, more preferably 1 h or more for growing particles as uniform spherical particles. For reducing the possibility that the particle size is so large that the power performance of the battery in the low SOC region is not sufficient, the time is preferably 15 h or less, more preferably 10 h or less, most preferably 5 h or less.

The preferred stirring duration time for ensuring that D50, i.e. a particle size at which the cumulative volume in the particle size distribution of secondary particles of the hydroxide precursor and the lithium transition metal composite oxide is 50%, is 5 µm or less varies depending on controlled pH. For example, the stirring duration time is preferably 3 to 10 h when pH is controlled to 11.5 to 14, and the stirring duration time is preferably 1 to 5 h when pH is controlled to 10.5 to 11.5.

When particles of the hydroxide precursor are prepared using as a neutralizer a sodium compound such as sodium hydroxide, sodium ions attached on particles are washed off in a subsequent washing step, and in the present invention, sodium ions are preferably washed off under such conditions that Na remains in an amount of 2000 ppm or more. For example, such conditions that the number of washings with 100 ml of ion-exchanged water is 1 can be employed when the prepared hydroxide precursor is extracted by suction filtration.

The active material for a lithium secondary battery in the present invention can be suitably prepared by mixing the coprecipitation hydroxide precursor with a Li compound, followed by heat-treating the mixture. The active material can be suitably produced by using lithium hydroxide, lithium carbonate, lithium nitrate, lithium acetate or the like as a Li compound. However, it is preferable that the Li raw material be charged in an excessive amount by about 1 to 5% in anticipation of loss of a part of the Li raw material during sintering.

In the present invention, a Na compound is preferably mixed with the hydroxide precursor together with a Li compound in the sintering step for ensuring that the content of Na in the lithium transition metal composite oxide is 3000 ppm or more. The Na compound is preferably sodium carbonate. The content of Na in the hydroxide precursor is about 500 to 2000 ppm, but the content of Na can be increased to 3000 ppm or more by mixing a Na compound.

The sintering temperature influences the reversible capacity of the active material.

If the sintering temperature is too high, there is such a tendency that the obtained active material is collapsed with an oxygen release reaction, and a phase defined as a Li[Li_{1/3}Mn_{2/3}]O₂ type of a monoclinic crystal, in addition to a hexagonal crystal as a main phase tends to be observed as a separate phase rather than a solid solution phase. Inclusion of this separate phase in a too large amount is not preferable because the reversible capacity of the active material is reduced. In this material, impurity peaks are observed at around 35° and at around 45° on the X-ray diffraction pattern. Therefore, the sintering temperature is preferably lower than a temperature at which the oxygen release reaction of the active material is influential. Therefore, it is important to ensure that the sintering temperature is lower than a temperature at which the oxygen release reaction of the active material is influential. The oxygen release temperature of the active material is generally 1000°C or higher in the composition range according to the present invention, but since the oxygen release temperature slightly varies depending on the composition of the active material, it is preferable to check the oxygen release temperature of the active material beforehand. Particularly, it should be noted that the oxygen release temperature has been found to shift toward the low temperature side as the amount of Co contained in the active material increases. As a method for checking the oxygen release temperature of the active material, a mixture of a coprecipitation precursor with Li compound may be subjected to thermogravimetric analysis (DTA-TG measurement) for simulating a sintering reaction process, but in this method, platinum used in a sample chamber of a measuring instrument may be corroded by a volatilized Li component to damage the instrument, and therefore a composition that is crystallized on some level beforehand by employing a sintering temperature of about 500°C should be subjected to thermogravimetric analysis.

On the other hand, if the sintering temperature is too low, there is such a tendency that crystallization does not sufficiently proceed, and the electrode characteristic is degraded. In the present invention, the sintering temperature is preferably at least 700°C. By ensuring sufficient crystallization, the resistance of a crystal grain boundary can be reduced to facilitate smooth transportation of lithium ions.

Furthermore, the inventors precisely analyzed the half width of the active material of the present invention to find that a strain remained in a lattice in the active material synthesized at a temperature of up to 750°C, and the strain could be mostly removed by synthesizing the active material at a higher temperature. The size of the crystallite was increased proportionally as the synthesis temperature was elevated. Therefore, in the composition of the active material of the present invention, a good discharge capacity was also obtained by aiming for particles in which the strain of the lattice is little present in a lattice, and the crystallite size is sufficiently grown. Specifically, it has been found that it is preferable to employ such a synthesis temperature (sintering temperature) that the amount of strain having an effect on the lattice constant is 2% or less, and the crystallite size is grown to 50 nm or more. When these particles are molded as an electrode and charge-discharge is performed, a change occurs due to expansion and contraction, but it is preferable for effect of present invention that the crystallite size to be kept at 30 nm or more even in a charge-discharge process. That is, an active material having a high reversible capacity can be obtained only by selecting the sintering temperature so as to be as close as possible to the above-described oxygen release temperature of the active material.

As described above, the preferred sintering temperature varies depending on the oxygen release temperature of the active material, and it is therefore difficult to uniformly set a preferred range of the sintering temperature, but for making the discharge capacity sufficiently high when the molar ratio of Li/Me is 1.2 to 1.6, the sintering temperature is preferably 700 to 950°C, and more preferably around 700 to 900°C particularly when Li/Me is 1.25 to 1.5.

The nonaqueous electrolyte used in the lithium secondary battery according to the present invention is not limited, and those that are generally proposed to be used in lithium batteries and the like can be used. Examples of the nonaqueous solvent used in the nonaqueous electrolyte may include, but are not limited to, cyclic carbonates such as propylene carbonate, ethylene carbonate, butyrene carbonate, chloroethylene carbonate and vinylene carbonate; cyclic esters such as γ-butyrolactone and γ-valerolactone; chain carbonates such as dimethyl carbonate, diethyl carbonate and ethylmethyl carbonate; chain esters such as methyl formate, methyl acetate and methyl butyrate; tetrahydrofuran or derivatives thereof; ethers such as 1,3-dioxane, 1,4-dioxane, 1,2-dimethoxyethane, 1,4-dibutoxyethane and methyl diglyme; nitriles such as acetonitrile, benzonitrile; dioxolane or derivatives thereof; and ethylene sulfide, sulfolane, sultone or derivatives thereof alone or mixtures of two or more thereof:

Examples of the electrolyte salt used in the nonaqueous electrolyte include inorganic ion salts having one of lithium (Li), sodium (Na) and potassium (K), such as LiClO₄, LiBF₄, LiAsF₆, LiPF₆, LiSCN, LiBr, LiI, Li₂SO₄, Li₂B₁₀Cl₁₀, NaClO₄, NaI, NaSCN, NaBr, KClO₄, KSCN, and organic ion salts such as LiCF₃SO₃, LiN(CF₃SO₂)₂, LiN(C₂F₅SO₂)₂, LiN(CF₃SO₂)(C₄F₉SO₂), LiC(CF₃SO₂)₃, LiC(C₂F₅SO₂)₃, (CH₃)₄NBF₄, (CH₃)₄NBr, (C₂H₅)₄NClO₄, (C₂H₅)₄NI, (C₃H₇)₄NBr, (n-C₃H₉)₄NClO₄, (n-C₄H₉)₄NI, (C₂H₅)₄N-maleate, (C₂H₅)₄N-benzoate, (C₂H₅)₄N-phtalate, lithium stearylsulfonate, lithium octylsulfonate and lithium dodecylbenzenesulfonate, these ionic compounds can be used alone or in combination of two or more thereof.

Further, by mixing LiBF₄ with a lithium salt having a perfluoroalkyl group, such as LiN(C₂F₅SO₂)₂, the viscosity of the electrolyte can be further reduced, so that the low-temperature characteristic can be further improved, and self discharge can be suppressed, thus being more desirable.

A ambient temperature molten salt or an ion liquid may be used as a nonaqueous electrolyte.

The concentration of the electrolyte salt in the nonaqueous electrolyte is preferably 0.1 mol/l to 5 mol/l, further preferably 0.5 mol/l to 2.5 mol/l for reliably obtaining a nonaqueous electrolyte battery having high battery characteristics.

The negative electrode material is not limited, and may be freely selected as long as it can precipitate or insert lithium ions. Examples thereof include titanium-based materials such as lithium titanate having a spinel-type crystal structure represented by Li[Li_{1/3}Ti_{5/3}]O₄, alloy-based materials such as Si-, Sb- and Sn-based alloy materials, lithium metal, lithium alloys (lithium metal-containing alloys such as lithium-silicon, lithium-aluminum, lithium-lead, lithium-tin, lithium-aluminum-tin, lithium-gallium and wood alloys), lithium composite oxides (lithium-titanium) and silicon oxide as well as alloys capable of insertion/extraction lithium, and carbon materials (e.g. graphite, hard carbon, low temperature-calcinated carbon and amorphous carbon).

In the present invention, a powder of a positive active material has a 50% particle size (D50) of 5 µm or less in particle size distribution measurement, but it is desirable that a powder of a negative electrode material have an average particle size of 100 µm or less. A crusher and a classifier are used for obtaining a powder in a predetermined shape. For example, a mortar, a ball mill, a sand mill, a vibration ball mill, a planet ball mill, a jet mill, a counter jet mill, a revolving airflow-type jet mill, a sieve or the like is used. At the time of crushing, wet crushing can also be used in which water, or an organic solvent such as hexane coexists. The classification method is not particularly limited, a sieve, an air classifier or the like is used as necessary in both dry and wet processes.

The positive active material and the negative electrode material which are main components of the positive electrode and the negative electrode have been described in detail above, but the aforementioned positive electrode and negative electrode may contain, in addition to the aforementioned main components, a conducting additive, a binding agent, a thickener, a filler and the like as other components.

The conducting additive is not limited as long as it is an electron-conductive material that has no adverse effect on battery performance, but normally conductive materials such as natural graphite (scaly graphite, flake graphite, earthy graphite, etc.), artificial graphite, carbon black, acetylene black, ketjen black, carbon whisker, carbon fibers, metal (copper, nickel, aluminum, silver, gold, etc.) powders, metal fibers and conductive ceramic materials can be included alone or as a mixture thereof.

Among them, acetylene black is desirable as a conducting additive from the viewpoint of electron conductivity and coating properties. The added amount of the conducting additive is preferably 0.1% by weight to 50% by weight, especially preferably 0.5% by weight to 30% by weight based on the total weight of the positive electrode or negative electrode. Particularly, use of acetylene black crushed into ultrafine particles of 0.1 to 0.5 µm is desirable because the required amount of carbon can be reduced. These mixing methods involve physical mixing, the ideal of which is homogeneous mixing. Thus, mixing can be carried out in a dry process or a wet process using a powder mixer such as a V-type mixer, an S-type mixer, a grinder, a ball mill or a planet ball mill.

As the binding agent, thermoplastic resins such as polytetrafluoroethylene (PTFE), polyvinylidene difluoride (PVDF), polyethylene and polypropylene, and polymers having rubber elasticity, such as ethylene-propylene-diene terpolymer (EPDM), sulfonated EPDM, styrene-butadiene rubber (SBR) and fluororubber can normally be used alone or as a mixture of two or more thereof. The added amount of the binding agent is preferably 1 to 50% by weight, especially preferably 2 to 30% by weight based on the total weight of the positive electrode or negative electrode.

The filler may be any material as long as it has no adverse effect on battery performance. A polyolefin-based polymer such as polypropylene or polyethylene, amorphous silica, alumina, zeolite, glass, carbon or the like is normally used. The added amount of the filler is preferably 30% by weight or less based on the total amount of the positive electrode or the negative electrode.

The positive electrode and the negative electrode are suitably prepared by mixing the aforementioned main components (positive active material in the positive electrode and negative electrode material in the negative electrode) and other materials to form a mixture, and mixing the mixture with an organic solvent such as N-methylpyrrolidone or toluene, followed by applying or contact-bonding the resulting mixed liquid onto a current collector that is described in detail below, and carrying out a heating treatment at a temperature of about 50°C to 250°C for about 2 hours. For the aforementioned coating method, for example, it is desirable to perform coating in any thickness and any shape using means such as roller coating by an applicator roll or the like, screen coating, a doctor blade system, spin coating or a bar coater, but the applying method is not limited thereto.

As a separator, it is preferable that a porous membrane, a nonwoven fabric or the like, which shows excellent high-rate discharge performance, be used alone or in combination. Examples of the material that forms the separator for a nonaqueous electrolyte battery include polyolefin-based resins represented by polyethylene, polypropylene and the like, polyester-based resins represented by polyethylene terephthalate, polybutyrene terephthalate and the like, polyvinylidene difluoride, vinylidene fluoride-hexafluoropropylene copolymers, vinylidene fluoride-perfluoro vinyl ether copolymers, vinylidene fluoride-tetrafluoroethylene copolymers, vinylidene fluoride-trifluoroethylene copolymers, vinylidene fluoride-fluoroethylene copolymers, vinylidene fluoride-hexafluoroacetone copolymers, vinylidene fluoride-ethylene copolymers, vinylidene fluoride-propylene copolymers, vinylidene fluoride-trifluoropropylene copolymers, vinylidene fluoride-tetrafluoroethylene-hexafluoropropylene copolymers and vinylidene fluoride-ethylene-tetrafluoroethylene copolymers.

The porosity of the separator is preferably 98% by volume or less from the viewpoint of the strength. The porosity is preferably 20% by volume or more from the viewpoint of charge-discharge characteristics.

For the separator, for example, a polymer gel formed of acrylonitrile, ethylene oxide, propylene oxide, methyl methacrylate, vinyl acetate, vinyl pyrrolidone or a polymer such as polyfluoride vinylidene and an electrolyte may be used. Use of the nonaqueous electrolyte in a gel form as described above is preferable from the viewpoint of being effective to prevent liquid leakage.

Further, for the separator, use of the above-mentioned porous membrane, nonwoven fabric or the like and the polymer gel in combination is desirable because liquid retainability of the electrolyte is improved. That is, a film with the surface and the microporous wall face of a polyethylene microporous membrane coated with a solvophilic polymer in a thickness of several µm or less, and an electrolyte is held within micropores of the film, so that the solvophilic polymer is formed into a gel.

Examples of the solvophilic polymer include, in addition to polyfluoride vinylidene, polymers in which an acrylate monomer having an ethylene oxide group, an ester group or the like, an epoxy monomer, a monomer having an isocyanate group, or the like is crosslinked. The monomer can be subjected to a crosslinking reaction by carrying out heating or using ultraviolet rays (UV) while using a radical initiator at the same time, or using active light rays such as electron beams (EB), or the like.

The configuration of the lithium secondary battery is not particularly limited, and examples thereof include a cylindrical battery, a prismatic battery and a flat battery having a positive electrode, a negative electrode and a roll-shaped separator.

Both the conventional positive active material and the active material of the present invention are capable of charge-discharge at a positive electrode potential of around 4.5 V (vs. Li/Li⁺). However, depending on the type of a nonaqueous electrolyte used, battery performance may be deterioration by oxidative decomposition of the nonaqueous electrolyte if the positive electrode potential during charge is too high. Therefore, a lithium secondary battery, with which a sufficient discharge capacity is obtained even when such a charge method that the maximum potential of the positive electrode during charge is 4.3 V (vs. Li/Li⁺) or less is employed at the time of operation, may be required. If the active material of the present invention is used, a discharge electrical amount, which exceeds the capacity of the conventional positive active material, i.e. about 200 mAh/g or more can be obtained even when such a charge method that the maximum potential of the positive electrode during charge is lower than 4.5 V (vs. Li/Li⁺), for example 4.4 (vs. Li/Li⁺) or less or 4.3 (vs. Li/Li⁺) or less is employed at the time of operation

For the positive active material according to the present invention to have a high discharge capacity, the ratio, at which transition metal elements that form a lithium transition metal composite oxide are present in areas other than transition metal sites of a layered rock-salt-type crystal structure, is preferably low. This can be achieved by ensuring that in the precursor that is subjected to a sintering step, transition metal elements such as Co, Ni and Mn in the precursor core particles are sufficiently homogeneously distributed, and selecting suitable conditions for the sintering step for promoting crystallization of an active material sample. If distribution of transition metals in precursor core particles that are subjected to the sintering step is not homogeneous, a sufficient discharge capacity is not obtained. The reason for this is not necessarily clear, but the present inventors think that this results from occurrence of so called cation mixing in which the obtained lithium transition metal composite oxide has some of transition metal elements present in areas other than transition metal sites of the layered rock-salt-type crystal structure, i.e. lithium sites, if the distribution of transition metals in precursor core particles that are subjected to the sintering step is not homogeneous. A similar thought can be applied in a crystallization process in the sintering step, wherein cation mixing in the layered rock-salt-type crystal structure easily occurs if crystallization of the active material sample is insufficient. Those in which the homogeneity of the distribution of the transition metal elements is high tend to have a high intensity ratio of diffraction peaks of the (003) line and the (104) line when the result of X-ray diffraction measurement is attributed to a space group R3-m. In the present invention, the intensity ratio of diffraction peaks of the (003) line and the (104) line from X-ray diffraction measurement is preferably I₍₀₀₃₎/I₍₁₀₄₎ ≥ 1.0. The intensity ratio is preferably I₍₀₀₃₎/I₍₁₀₄₎ > 1 at the end of discharge after charge-discharge. If synthesis conditions and synthesis procedures for the precursor are inappropriate, the peak intensity ratio becomes a smaller value, which is often less than 1.

By employing the synthesis conditions and synthesis procedures described in the specification of the present application, a positive active material having high performance as described above can be obtained. Particularly, there can be provided a positive active material for a lithium secondary battery with which a high discharge capacity can be obtained even when the charge upper limit potential is set to lower than 4.5 (vs.Li/Li⁺), e.g. lower than 4.4 V (vs.Li/Li⁺) or 4.3 V (vs.Li/Li⁺).

### Examples

### (Example 1)

Cobalt sulfate heptahydrate (14.08 g), nickel sulfate hexahydrate (21.00 g) and manganese sulfate pentahydrate (65.27 g) were weighed, and the total amount of these dissolved in 200 ml of ion-exchanged water to prepare a 2.0 M aqueous sulfate solution of which the molar ratio of Co : Ni : Mn was 12.50 : 19.94 : 67.56. Into a 2 L reaction tank was poured 750 ml of ion-exchanged water, and an Ar gas was bubbled for 30 min to thereby remove dissolved oxygen in ion-exchanged water. The temperature of the reaction tank was set at 50°C (± 2°C), and the aqueous sulfate solution was added dropwise at a rate of 3 ml/min while the contents in the reaction tank was stirred at a rotation speed of 700 rpm using a paddle impeller equipped with a stirring motor. The control was performed so that pH in the reaction tank was kept at 11.0 (± 0.05) by appropriately adding dropwise an aqueous solution containing 2.0 M sodium hydroxide and 0.5 M ammonia during dropwise addition. After completion of dropwise addition of the aqueous sulfate solution, stirring the contents in the reaction tank was continued for further 3h. After stirring was stopped, the reaction tank was left standing for 12 h or more.

Next, particles of a coprecipitation hydroxide generated in the reaction tank were separated using a Buchner funnel (130mmφ) and a suction filtration device, 100 ml of ion-exchanged water was further poured into the Buchner funnel, and the coprecipitation compound was washed by stirring with a glass rod. By carrying out the washing operation once, sodium ions attached on particles were washed off. Next, the particles were dried at 100°C under normal pressure in an air atmosphere using an electric furnace. Thereafter, the particles were crushed by an automatic mortar made of agate for equalizing the particle size. In this way, a coprecipitation hydroxide precursor was prepared.

Lithium hydroxide (1.102 g) was added to the coprecipitation hydroxide precursor (1.768 g), and the resulting mixture was adequately mixed using an automatic mortar made of agate to prepare a mixed powder of which the molar ratio of Li/Me (Co, Ni, Mn) (molar ratio of lithium hydroxide mixed with the coprecipitation hydroxide precursor) was 1.3. The powder was molded at a pressure of 6 MPa using a pellet molding machine to form a pellet having a diameter of 25 mm. The amount of the mixed powder subjected to pellet molding was determined by performing conversion calculation so that the mass as an expected final product would be 2 g. One of the pellets was placed in an alumina boat having a total length of about 100 mm, the boat was placed in a box-type electric furnace (model: AMF 20), the temperature was elevated from ordinary temperature to 900°C over 10 hours under normal pressure in an air atmosphere, and the pellet was sintered at 900°C for 4h. The box-type electric furnace had an internal dimension of 10 cm (height), 20 cm (width) and 30 cm (depth), and provided with electrically heated wires at intervals of 20 cm in the width direction. After sintering, a heater was switched off, the alumina boat was naturally cooled as it was left standing in the furnace. As a result, the temperature of the furnace decreased to about 200°C after 5 hours, but the subsequent temperature fall rate was slightly low. After the elapse of a whole day and night, the pellet was taken out after confirming that the temperature of the furnace was not higher than 100°C, and crushed by an automatic mortar made of agate for equalizing the particle size. In this way, a lithium transition metal composite oxide Li_{1.13}Co_{0.11}Ni_{0.17}Mn_{0.59}O₂ containing Na according to Example 1 was prepared.

### (Examples 2 to 6)

A lithium transition metal composite oxide containing Na according to each of Examples 2 to 6 was prepared in the same manner as in Example 1 except that the coprecipitation hydroxide precursor (1.768 g) was mixed with sodium carbonate in an amount of 0.007 g for Example 2, 0.011 g for Example 3, 0.015 g for Example 4, 0.018 g for Example 5 and 0.028 g for Example 6 together with 1.102 g of lithium hydroxide.

### (Examples 7 to 12)

A lithium transition metal composite oxide containing Na according to each of Examples 7 to 12 was prepared in the same manner as in Examples 1 to 6 except that the sintering temperature was changed from 900°C to 800°C.

### (Examples 13 to 18)

A lithium transition metal composite oxide containing Na according to each of Examples 13 to 18 was prepared in the same manner as in Examples 1 to 6 except that the sintering temperature was changed from 900°C to 700°C.

### (Example 19)

A lithium transition metal oxide Li_{1.11}Co_{0.11}Ni_{0.18}Mn_{0.60}O₂ containing Na according to Example 19 was prepared in the same manner as in Example 1 except that the molar ratio of Li/Me (Co, Ni, Mn), was changed from 1.3 to 1.25 (1.071 g of Lithium hydroxide was mixed to 1.788 g of the coprecipitation hydroxide precursor), and the sintering temperature was changed from 900°C to 700°C.

### (Example 20)

A lithium transition metal oxide Li_{1.15}Co_{0.11}Ni_{0.17}Mn_{0.57}O₂ containing Na according to Example 20 was prepared in the same manner as in Example 1 except that the molar ratio of Li/Me (Co, Ni, Mn) was changed from 1.3 to 1.35 (1.131 g of Lithium hydroxide was mixed to 1.749 g of the coprecipitation hydroxide precursor), and the sintering temperature was changed from 900°C to 800°C.

### (Example 21)

A lithium transition metal oxide Li_{1.17}Co_{0.10}Ni_{0.17}Mn_{0.56}O₂ containing Na according to Example 21 was prepared in the same manner as in Example 1 except that the molar ratio of Li/Me (Co, Ni, Mn) (molar ratio of lithium hydroxide mixed with the coprecipitation hydroxide precursor) was changed from 1.3 to 1.4 (1.160 g of Lithium hydroxide was mixed to 1.729 g of the coprecipitation hydroxide precursor), and the sintering temperature was changed from 900°C to 800°C.

### (Example 22)

A lithium transition metal oxide Li_{1.184}Co_{0.102}Ni_{0.163}Mn_{0.551}O₂ containing Na according to Example 22 was prepared in the same manner as in Example 1 except that the molar ratio of Li/Me (Co, Ni, Mn) (molar ratio of lithium hydroxide mixed with the coprecipitation hydroxide precursor) was changed from 1.3 to 1.45 (1.189 g of Lithium hydroxide was mixed to 1.711 g of the coprecipitation hydroxide precursor).

### (Example 23)

A lithium transition metal oxide Li_{1.20}Co_{0.10}Ni_{0.16}Mn_{0.54}O₂ containing Na according to Example 23 was prepared in the same manner as in Example 1 except that the molar ratio of Li/Me (Co, Ni, Mn) (molar ratio of lithium hydroxide mixed with the coprecipitation hydroxide precursor) was changed from 1.3 to 1.5 (1.216 g of Lithium hydroxide was mixed to 1.692 g of the coprecipitation hydroxide precursor).

### (Example 24)

A lithium transition metal composite oxide containing Na according to Example 24 was prepared in the same manner as in Example 1 except that the time over which contents in the reaction tank were further continuously stirred after completion of dropwise addition in the step of preparing a coprecipitation hydroxide precursor was changed from 3 h to 2 h.

### (Example 25)

A lithium transition metal composite oxide containing Na according to Example 25 was prepared in the same manner as in Example 1 except that the time over which contents in the reaction tank were further continuously stirred after completion of dropwise addition in the step of preparing a coprecipitation hydroxide precursor was changed from 3 h to 1 h.

### (Comparative Example 1)

Cobalt sulfate heptahydrate (14.08 g), nickel sulfate hexahydrate (21.00 g) and manganese sulfate pentahydrate (65.27 g) were weighed, and the total amount of these dissolved in 200 ml of ion-exchanged water to prepare a 2.0 M aqueous sulfate solution of which the molar ratio of Co : Ni : Mn was 12.50 : 19.94 : 67.56. Into a 2 L reaction tank was poured 750 ml of ion-exchanged water, and an Ar gas was bubbled for 30 min to thereby remove dissolved oxygen in ion-exchanged water. The temperature of the reaction tank was set at 50°C (± 2°C), and the aqueous sulfate solution was added dropwise at a rate of 3 ml/min while the contents in the reaction tank was stirred at a rotation speed of 700 rpm using a paddle impeller equipped with a stirring motor. The control was performed so that pH in the reaction tank was kept at 11.0 (± 0.05) by appropriately adding dropwise an aqueous solution containing 2.0 M sodium hydroxide and 0.5 M ammonia during dropwise addition of the aqueous sulfate solution. After completion of dropwise addition, stirring the contents in the reaction tank was continued for further 3h. After stirring was stopped, the reaction tank was left standing for 12 h or more.

Next, particles of a coprecipitation hydroxide generated in the reaction tank were separated using a Buchner funnel (130mmφ) and a suction filtration device, 100 ml of ion-exchanged water was further poured into the Buchner funnel, and the coprecipitation compound was washed by stirring with a glass rod. By carrying out the washing operation of 5 times, sodium ions attached on particles were washed off. Next, the particles were dried at 100°C under normal pressure in an air atmosphere using an electric furnace. Thereafter, the particles were crushed by an automatic mortar made of agate for equalizing the particle size. In this way, a coprecipitation hydroxide precursor was prepared.

Lithium hydroxide was added to the coprecipitation hydroxide precursor, and the resulting mixture was sintered, and crushed for equalizing particle sizes as in Example 1, so that a lithium transition metal composite oxide Li_{1.13}Co_{0.11}Ni_{0.17}Mn_{0.59}O₂ containing Na according to Comparative Example 1 was prepared.

### (Comparative Examples 2 to 4)

A lithium transition metal composite oxide according to each of Comparative Examples 2 to 4 was prepared in the same manner as in Comparative Example 1 except that sodium hydroxide and lithium hydroxide (Na/Li = 1/1 [M] for Comparative Example 2 and Na/Li = 0.5/1.5 [M] for Comparative Example 3) were included, in place of 2.0 M sodium hydroxide, in an aqueous solution which was added dropwise when a coprecipitation hydroxide precursor was prepared and that 2.0 M lithium hydroxide was included in stead of including sodium hydroxide (Comparative Example 4).

### (Example 26, Comparative Examples 5 to 7)

A coprecipitation hydroxide precursor was prepared in the same manner as in Comparative Example 1 except that sodium hydroxide and lithium hydroxide were included at the molar ratio of Na/Li = 0.5/1.5 [M], in place of 2.0 M sodium hydroxide, in an aqueous solution which was added dropwise when a coprecipitation hydroxide precursor was prepared.
Thereafter, the resulting mixture was prepared, sintered and crushed for equalizing particle sizes as in Example 1 except that the coprecipitation hydroxide precursor (1.768 g) was mixed with sodium carbonate in an amount of 0.0088 g for Example 26, 0.0083 g for Comparative Examples 5, 0.0078 g for Comparative Examples 6, and 0.0074 g for Comparative Examples 7 together with 1.102 g of lithium hydroxide.

In this way, a lithium transition metal composite oxide containing Na according to each of Examples 26 and Comparative Example 5 to 7 was prepared.

### (Example 27)

A coprecipitation hydroxide precursor was prepared in the same manner as in Comparative Example 1 except that sodium hydroxide and lithium hydroxide were included at the molar ratio of Na/Li = 0.5/1.5 [M], in place of 2.0 M sodium hydroxide, in an aqueous solution which was added dropwise when a coprecipitation hydroxide precursor was prepared.

Thereafter, the resulting mixture was prepared, sintered and crushed for equalizing particle sizes as in Example 1 except that 1.788 g of the coprecipitation hydroxide precursor was mixed with sodium carbonate in an amount of 0.0369 g together with 1.071 g of lithium hydroxide (Li/Me was changed from 1.3 to 1.25), and the sintering temperature was changed from 900°C to 700°C. In this way, a lithium transition metal composite oxide containing Na according to each of Examples 27 was prepared.

### (Example 28)

A coprecipitation hydroxide precursor was prepared in the same manner as in Comparative Example 1 except that sodium hydroxide and lithium hydroxide were included at the molar ratio of Na/Li = 0.5/1.5 [M], in place of 2.0 M sodium hydroxide, in an aqueous solution which was added dropwise when a coprecipitation hydroxide precursor was prepared.

Thereafter, the resulting mixture was prepared, sintered and crushed for equalizing particle sizes as in Example 1 except that 1.729 g of the coprecipitation hydroxide precursor was mixed with sodium carbonate in an amount of 0.0369 g together with 1.160 g of lithium hydroxide (Li/Me was changed from 1.3 to 1.4), and the sintering temperature was changed from 900°C to 800°C.
In this way, a lithium transition metal composite oxide containing Na according to each of Examples 28 was prepared.

### (Example 29)

A coprecipitation hydroxide precursor was prepared in the same manner as in Comparative Example 1 except that sodium hydroxide and lithium hydroxide were included at the molar ratio of Na/Li = 0.5/1.5 [M], in place of 2.0 M sodium hydroxide, in an aqueous solution which was added dropwise when a coprecipitation hydroxide precursor was prepared.

Thereafter, the resulting mixture was prepared, sintered and crushed for equalizing particle sizes as in Example 1 except that 1.692 g of the coprecipitation hydroxide precursor was mixed with sodium carbonate in an amount of 0.0369 g together with 1.216 g of lithium hydroxide (Li/Me was changed from 1.3 to 1.5).

In this way, a lithium transition metal composite oxide containing Na according to each of Examples 29 was prepared.

### (Comparative Examples 8 to 10)

A lithium transition metal composite oxide containing Na according to Comparative Examples 8 to 10 was prepared in the same manner as in Example 1 except that 1.768 g of the coprecipitation hydroxide precursor was mixed with sodium carbonate in an amount of 0.037 g for Comparative Examples 8, 0.046 g for Comparative Examples 9, and 0.069 g for Comparative Examples 10 together with 1.102 g of lithium hydroxide.

### (Comparative Examples 11)

A lithium transition metal composite oxide containing Na according to Comparative Examples 11 was prepared in the same manner as in Example 1 except that the time over which contents in the reaction tank were further continuously stirred after completion of dropwise addition in the step of preparing a coprecipitation hydroxide precursor was changed from 3 h to 5 h

### (Comparative Examples 12)

A lithium transition metal composite oxide containing Na according to Comparative Examples 12 was prepared in the same manner as in Example 1 except that the time over which contents in the reaction tank were further continuously stirred after completion of dropwise addition in the step of preparing a coprecipitation hydroxide precursor was changed from 3 h to 7 h

### (Comparative Example 13)

A lithium transition metal composite oxide containing Na according to Comparative Example 13 in the same manner as in Example 1 except that the composition was changed from Li_{1.13}Co_{0.11}Ni_{0.17}Mn_{0.59}O₂ to LiCo_{1/3}Ni_{1/3}Mn_{1/3}O₂).

### (Comparative Example 14)

A lithium transition metal composite oxide containing Na according to Comparative Example 14 in the same manner as in Comparative Example 4 except that the composition was changed from Li_{1.13}Co_{0.11}Ni_{0.17}Mn_{0.59}O₂ to LiCo_{1/3}Ni_{1/3}Mn_{1/3}O₂.

### (Method for measuring Na content)

The amount of Na contained in the obtained positive active material was determined in the following manner.

An active material (50 mg) was weighed, and put in 10 ml of a 10 wt% aqueous hydrochloric acid solution. By heating the aqueous solution on a hot plate at 150°C, the active material was sufficiently dissolved. Thereafter, the aqueous solution was filtered using a suction filtration device to remove fine particles contained in the aqueous solution. Ion-exchanged water (90 ml) was added to the aqueous solution after filtration, and the resulting mixture was stirred to prepare 100 ml of a sample solution. Three reference solutions having different Na concentrations were prepared for creating a calibration curve for determining the Na content. The reference solution was prepared by diluting a Na standard solution (manufactured by NACALAI TESQUE, INC.; 1000 ppm) to a desired concentration using ion-exchanged water.

The Na content was measured by performing an analysis with an ICP emission spectrophotometer (SHIMADZU, ICPS-8100) using about 20 to 40 ml of each of the sample solution and the reference solution.

The amount of Na contained in the positive active material can be measured by atomic absorption spectroscopy aside from the ICP emission spectroscopic analysis described above.

### (Measurement of particle size)

For the lithium transition metal composite oxides according to Examples 1 to 29 and Comparative Examples 1 to 14, particle size distribution measurements were made in accordance with the following conditions and procedure. Microtrac (model: MT 3000) manufactured by Nikkiso Co., Ltd. was used as a measuring apparatus. The measuring apparatus includes an optical stage, a sample supply section and a computer including control software, and a wet cell having a laser light transmission window is placed on the optical stage. For the measurement principle, a wet cell, through which a dispersion with a measurement object sample dispersed in a dispersive solvent is circulated, is irradiated with laser light, and a distribution of scattered light from the measurement sample is converted into a particle size distribution. The dispersion is stored in a sample supply section, and cyclically supplied to the wet cell by a pump. The sample supply section constantly receives ultrasonic vibrations. In this measurement, water was used as a dispersive solvent. Microtrac DHS for Win 98 (MT 3000) was used as measurement control software. For "substance information" set and input in the measuring apparatus, a value of 1.33 was set as the "refractive index" of the solvent, "Transparent" was selected as the "transparency", and "Nonspherical" was selected as the "spherical particle". A "Set Zero" operation is performed prior to measurement of the sample. The "Set Zero" operation is an operation for subtracting influences on subsequent measurements of disturbance factors (glass, contamination of the glass wall face, glass irregularities, etc.) other than scattered light from particles, wherein only water as a dispersive solvent is fed in a sample supply section, a background operation is performed with only water as a dispersive solvent being circulated through a wet cell, and background data is stored in a computer. Subsequently, a "Sample LD (Sample Loading)" operation is performed. The Sample LD operation is an operation for optimizing the concentration of a sample in a dispersion that is cyclically supplied to a wet cell during measurement, wherein a measurement object sample is manually introduced into a sample supply section in accordance with instructions of measurement control software until an optimum amount is reached. Subsequently, a "measurement" button is pushed, so that a measurement operation is performed. The measurement operation is repeated twice and as an average thereof, a measurement result is output from a computer. The measurement result is acquired as a particle size distribution histogram, and the values of D10, D50 and D90 (D10, D50 and D90 are particle sizes at which the cumulative volume in the particle size distribution of secondary particles is 10%, 50% and 90%, respectively). Values of D50 measured are shown in Table 1 as "D50 particle size (µm)".

### (Assembly and evaluation of lithium secondary battery)

A lithium secondary battery was assembled by the following procedure using the lithium transition metal composite oxide of each of Examples 1 to 29 and Comparative examples 1 to 14 as a positive active material for a lithium secondary battery, and battery characteristics were evaluated.

A application paste was prepared in which the active material, acetylene black (AB) and polyvinylidene fluoride (PVdF) were mixed at a ratio of 90 : 5 : 5 in terms of a weight ratio and dispersed with N-methylpyrrolidone as a dispersion medium. The application paste was applied to one surface of an aluminum foil current collector having a thickness of 20 µm to prepare a positive electrode plate. The mass and applying thickness of the active material applied per fixed area were equalized so that test conditions were the same among the lithium secondary batteries of all Examples and Comparative Examples.

For the purpose of accurately observing the independent behavior of a positive electrode, lithium metal was brought into close contact with a nickel foil current collector and used for a counter electrode, i.e. a negative electrode. Here, a sufficient amount of lithium metal was placed on the negative electrode so that the capacity of the lithium secondary battery was not limited by the negative electrode.

As an electrolyte solution, a solution obtained by dissolving LiPF₆, in a concentration of 1 mol/l, in a mixed solvent of ethylene carbonate (EC)/ethylmethyl carbonate (EMC)/dimethyl carbonate (DMC) in a volume ratio of 6 : 7 : 7, was used. As a separator, a microporous membrane made of polypropylene, the surface of which was modified with polyacrylate, was used. As a outer case, a metal resin composite film made of polyethylene terephthalate (15 µm)/aluminum foil (50 µm)/metal-adhesive polypropylene film (50 µm) was used. The electrode was stored such that the open ends of a positive electrode terminal and a negative electrode terminal were externally exposed. Fusion margins with the inner surfaces of the aforementioned metal resin composite films facing each other were airtightly sealed except a portion forming an electrolyte solution filling hole. The electrolyte solution was injected, followed by sealing the electrolyte solution filling hole. The electrolyte solution in an amount enough for the prepared battery not to suffer from a liquid shortage was injected in an equal amount into each battery from the electrolyte solution filling hole, and thereafter the electrolyte solution filling hole was thermally sealed under a reduced pressure to assemble a lithium secondary battery.

The lithium secondary battery assembled in the procedure described above was subjected to an initial charge-discharge step at 25°C. Charge was constant current-constant voltage charge with a current of 0.1 CA and a voltage of 4.6 V, and the charge termination condition was set at a time point at which the current value decreased to 1/6. Discharge was constant current discharge with a current of 0.1 CA and a final voltage of 2.0 V. This charge-discharge was carried out 2 cycles. Here, a rest time of 30 minutes was provided each after charge and after discharge.

### <Discharge performance evaluation test>

Next, a 1 cycle charge-discharge test was conducted with the charge voltage changed. Voltage control was all performed for the positive electrode potential. Conditions for the charge-discharge test are same as the conditions for the initial charge-discharge step except that the charge voltage is 4.3 V. The discharge electrical amount at this time was recorded as a "low-rate discharge capacity (mAh/g)".

Subsequently, a high-rate discharge performance test was conducted at a temperature of 25°C. Charge conditions included constant current-constant voltage charge with a current density of 1 mA/cm², an upper limit of 4.3 V and a final current density of 0.2 mA/cm², and discharge conditions included constant current discharge with a current of 2CA and a final voltage of 2.0 V. The discharge electrical amount at this time was recorded as a "high-rate discharge capacity (mAh/g)".

The test results for the lithium secondary battery using the lithium transition metal composite oxide according to each of Examples 1 to 29 and Comparative Examples 1 to 14 as a positive active material for a lithium secondary battery are shown in Table 1.

**[Table 1]**

| | Li/Me molar ratio | Neutralizer | Use of Na₂CO₃ | Sintering temperature (°C) | Na(ppm) | D50 (µm) | Low-rate discharge capacity (mAh/g) | High-rate discharge capacity (mAh/g) | Remarks |
|---|---|---|---|---|---|---|---|---|---|
| Example 1 | 1.3 | NaOH | none | 900 | 2000 | 5 | 208 | 168 | |
| Example 2 | ↑ | NaOH | ○ | 900 | 3600 | 5 | 210 | 169 | |
| Example 3 | ↑ | NaOH | ○ | 900 | 4500 | 5 | 210 | 170 | |
| Example 4 | ↑ | NaOH | ○ | 900 | 5300 | 5 | 212 | 170 | |
| Example 5 | ↑ | NaOH | ○ | 900 | 6000 | 5 | 215 | 170 | |
| Example 6 | ↑ | NaOH | ○ | 900 | 8000 | 5 | 217 | 168 | * |
| Example 7 | ↑ | NaOH | none | 800 | 2000 | 5 | 212 | 172 | |
| Example 8 | ↑ | NaOH | ○ | 800 | 3600 | 5 | 217 | 174 | |
| Example 9 | ↑ | NaOH | ○ | 800 | 4500 | 5 | 219 | 172 | |
| Example 10 | ↑ | NaOH | ○ | 800 | 5300 | 5 | 219 | 173 | |
| Example 11 | ↑ | NaOH | ○ | 800 | 6000 | 5 | 220 | 172 | |
| Example 12 | ↑ | NaOH | ○ | 800 | 8000 | 5 | 224 | 172 | * |
| Example 13 | ↑ | NaOH | none | 700 | 2000 | 5 | 214 | 171 | |
| Example 14 | ↑ | NaOH | ○ | 700 | 3600 | 5 | 216 | 174 | |
| Example 15 | ↑ | NaOH | ○ | 700 | 4500 | 5 | 217 | 173 | |
| Example 16 | ↑ | NaOH | ○ | 700 | 5300 | 5 | 217 | 173 | |
| Example 17 | ↑ | NaOH | ○ | 700 | 6000 | 5 | 219 | 173 | |
| Example 18 | ↑ | NaOH | ○ | 700 | 8000 | 5 | 220 | 172 | * |
| Example 19 | 1.25 | NaOH | none | 700 | 2000 | 5 | 202 | 165 | |
| Example 20 | 1.35 | NaOH | none | 800 | 2000 | 5 | 220 | 170 | |
| Example 21 | 1.4 | NaOH | none | 800 | 2000 | 5 | 218 | 167 | |
| Example 22 | 1.45 | NaOH | none | 900 | 2000 | 5 | 216 | 166 | * |
| Example 23 | 1.5 | NaOH | none | 900 | 2000 | 5 | 215 | 166 | * |
| Example 24 | 1.3 | NaOH | none | 900 | 2000 | 3 | 209 | 170 | |
| Example 25 | 1.3 | NaOH | none | 900 | 2000 | 1 | 209 | 172 | |
| Comparative Example 1 | 1.3 | NaOH | none | 800 | 1500 | 5 | 208 | 102 | Normal washing |
| Comparative Example 2 | ↑ | NaOH/LiO H (1/1) | none | 800 | 1000 | 5 | 207 | 91 | Normal washing |
| Comparative Example 3 | ↑ | NaOH/LiO H (0.5/1.5) | none | 800 | 500 | 5 | 209 | 105 | Normal washing |
| Comparative Example 4 | ↑ | LiOH | none | 800 | 100 | 5 | 210 | 122 | Normal washing |
| Example 26 | ↑ | NaOH/LiO H (0.5/1.5) | ○ | 800 | 1900 | 5 | 211 | 160 | |
| Comparative Example 5 | ↑ | ↑ | ○ | 800 | 1800 | 5 | 210 | 145 | |
| Comparative Example 6 | ↑ | ↑ | ○ | 800 | 1700 | 5 | 210 | 130 | |
| Comparative Example 7 | ↑ | ↑ | ○ | 800 | 1600 | 5 | 209 | 114 | |
| Example 27 | 1.25 | ↑ | ○ | 700 | 8000 | 5 | 215 | 165 | * |
| Example 28 | 1.4 | ↑ | ○ | 800 | 8000 | 5 | 225 | 174 | * |
| Example 29 | 1.5 | ↑ | ○ | 900 | 8000 | 5 | 222 | 168 | * |
| Comparative Example 8 | ↑ | NaOH | ○ | 800 | 10000 | 5 | 224 | 148 | |
| Comparative Example 9 | ↑ | NaOH | ○ | 800 | 12000 | 5 | 223 | 145 | |
| Comparative Example 10 | ↑ | NaOH | ○ | 800 | 15000 | 5 | 216 | 137 | |
| Comparative Example 11 | 1.3 | NaOH | none | 900 | 2000 | 8 | 208 | 144 | |
| Comparative Example 12 | 1.3 | NaOH | none | 900 | 2000 | 10 | 207 | 126 | |
| Comparative Example 13 | 1.0 | NaOH | none | 900 | 2100 | 5 | 150 | 133 | α=0 |
| Comparative Example 14 | ↑ | LiOH | none | 900 | 100 | 5 | 155 | 135 | α=0 |

| | | | | | | | | | |
|---|---|---|---|---|---|---|---|---|---|
| * Examples 6, 12, 18, 22, 23, 27, 28 and 29 do not belong to the present invention. | | | | | | | | | |

From Table 1, it is apparent that the lithium secondary battery using the positive active material of each of examples 1 to 29, of which the Li/Me ratio of the lithium transition metal composite oxide is 1.25 to 1.5 and which contains 1900 to 8000 ppm of Na and has a D50 particle size of 5 µm or less, has a low-rate discharge capacity (0.1C capa) of 200 mAh/g or more, a high discharge capacity and a high-rate discharge capacity (2C capa) of 160 mAh or more, and is excellent in high-rate discharge performance.

In contrast, the lithium secondary battery using the positive active material, the Li/Me ratio of which is 1.25 to 1.5, but the Na content of which is less than 1900 ppm for Comparative Examples 1 to 7 and more than 8000 ppm for Comparative Examples 8 to 10, has a high low-rate discharge capacity, but has a high-rate discharge capacity (2C capa) of 150 mAh or less, and thus high-rate discharge performance may not be sufficiently improved.

If such conditions that the number of washings with 100 ml of ion-exchanged water is 5 are employed as in Comparative Example 1 when the prepared hydroxide precursor is extracted by suction filtration, Na is excessively removed, and therefore the number of washings is preferably 1 or so.

The lithium secondary battery using the positive active material of Comparative examples 11 and 12, which has a D50 particle size of more than 5 µm also has a high-rate discharge capacity (2C capa) of 150 mAh or less, and thus high-rate discharge performance may not be sufficiently improved.

If the time over which the contents in the reaction tank are further continuously stirred after completion of dropwise addition in the step of preparing a coprecipitation hydroxide precursor is 5 h or more, the D50 particle size is more than 5 µm as in Comparative Examples 11 and 12, and therefore the stirring continuation time is preferably 3 h or less.

The lithium secondary battery using a positive active material (LiCo_{1/3}Ni_{1/3}Mn_{1/3}O₂), which has a Na content of 2100 ppm, but is of so called a "LiMeO₂-type", not of so called a "lithium-excess-type", has a low-rate discharge capacity (0.1C capa) of only 150 mAh/g and a low high-rate discharge capacity (2C capa) of 140 mAh or less as shown in Comparative Example 13. Moreover, since the lithium secondary battery of Comparative Example 13 described above has a low-rate discharge capacity and a high-rate discharge capacity that are comparable to that of the lithium secondary battery of Comparative Example 14 using a positive active material of the same "LiMeO₂-type" which has a Na content of 100 ppm, such an effect that high-rate discharge performance is significantly improved by including Na in a specified amount may be specific to the "lithium-excess-type" positive active material.

In Examples described above, the content of Na and the value of D50 (D50 particle size) in the particle size distribution of secondary particles for the lithium transition metal composite oxide of the present invention have been described on the basis of the results of making measurements for the lithium transition metal composite oxide (positive active material) before preparation of the electrode. However, for a lithium secondary battery having history of charge-discharge, the content of Na and the value of the D50 particle size can be determined by carrying out a treatment in accordance with the procedure described below.

First, a lithium secondary battery having a history of charge-discharge (in the present invention, a lithium secondary battery of which "discharge capacity (mAh/g)" was measured in Example) is sufficiently discharged by low rate discharge at about 0.1 CmA, and the lithium secondary battery is disassembled in an atmosphere with a dew point of -20°C or lower to take out a positive electrode. The positive electrode that is taken out is placed in a thermostatic bath at 80°C, and dried until an electrolyte solution (solvent) attached thereon is sufficiently volatilized. From the positive electrode, a composite (55 mg) is taken from a composite layer containing a positive active material, and an ICP emission spectroscopic analysis is performed according to the procedure described in paragraph [0092]. The obtained value is converted into a concentration per mass of the positive active material.

In a positive electrode using the positive active material of Example, a significant change was not observed in the contents of Na even after charge-discharge. Therefore, it can be said that according to the measurement method described above, the content of Na in the positive active material can be measured even for a lithium secondary battery after charge-discharge.

In a lithium secondary battery using a positive electrode containing the positive active material of the present invention, Na in the positive active material may leak out from the positive electrode depending on use conditions. In this case, Na is also contained in an electrolyte solution and a negative electrode, and therefore by measuring not only the content of Na in the positive electrode but also measuring the amount of Na contained in the electrolyte solution and/or the negative electrode, the amount of Na contained in the positive active material can be known more accurately.

By carrying out a treatment in accordance with the procedure described below for a lithium secondary battery having a history of charge-discharge, for which the battery is discharged, the positive electrode is taken out and the positive electrode is dried as described above, the value of the D50 particle size can be determined.

The positive active material is separated from the positive composite of the positive electrode. The positive composite often contains a conducting material and a binder. Examples of the method for removing a binder from the positive composite include a method in which a solvent capable of dissolving the binder is used. For example, when the binder is thought to be polyvinylidene fluoride, mention is made of a method in which the positive composite is immersed in a sufficient amount of N-methylpyrrolidone, heated at 150°C for several hours, and then separated into a powder containing the positive active material and a solvent containing the binder by filtration or the like. For example when the conducting material is thought to be a carbonaceous material such as acetylene black, examples of the method for removing the conducting material from the powder containing the positive active material, from which the binder is removed in the manner described above, include a method in which the carbonaceous material is oxidatively decomposed to be removed by a heat treatment. Conditions for the heat treatment are required to include a temperature at which the conducting material is thermally decomposed in an atmosphere including oxygen, or higher, but if the heat treatment temperature is too high, the properties of the positive active material may be changed, and therefore such a temperature is desirable that has no influences on the properties of the positive active material wherever possible. For example, in the case of the positive active material of the present invention, this temperature may be about 700°C in the air.

By measuring the positive active material thus obtained for the particle size in the manner described in paragraph [0093], a value of the D50 particle diameter can be determined.

However, in the process of production of the battery and the process of charge-discharge of the battery, some positive active material particles may be broken. By making a SEM observation of a positive electrode plate taken out from the battery, an approximate degree at which the positive active material is broken can be known. When it can be predicted that broken positive active material particles are included, the average particle size (D50 particle size) is determined after data is corrected so that particles of 2 µm or less are excluded in a particle size distribution curve obtained from measurement for excluding a fine powder generated due to breakage.

As described above, in the present invention, high-rate discharge performance may be significantly improved by including Na in an amount of 1900 ppm or more and 8000 ppm or less in a positive active material for a lithium secondary battery which contains a lithium transition metal composite oxide represented by the composition formula of Li_{1+α}Me_{1-α}O₂ (Me is a transition metal including Co, Ni and Mn and α > 0), so that the 50% particle size (D50) in particle distribution measurement is 5 µm or less.

By using a positive active material containing a novel lithium transition metal composite oxide of the present invention, a lithium secondary battery, which has a high discharge capacity and is excellent in high-rate discharge performance, can be provided, and therefore the lithium secondary battery is useful as a lithium secondary battery for hybrid cars and electric cars.

## Claims

1. A positive active material for a lithium secondary battery comprising a lithium transition metal composite oxide having an α-NaFeO₂-type crystal structure and represented by the composition formula of Li_{1+α}Me_{1-α}O₂(Me is a transition metal including Co, Ni and Mn and (1 + α)/(1 - α ) is 1.25 to 1.4), wherein the positive active material contains Na in an amount of 1900 ppm to 6000 ppm by weight, and has a 50% particle size (D50) of 5 µm or less in particle size distribution measurement.

2. A method for production of the positive active material for a lithium secondary battery according to claim 1, wherein a precursor for synthesis of the lithium transition metal composite oxide is a hydroxide of a transition metal including Co, Ni and Mn.

3. The method for production of a positive active material for a lithium secondary battery according to claim 2, wherein for synthesis of the lithium transition metal composite oxide, the hydroxide precursor of the transition metal including Co, Ni and Mn is mixed with a sodium compound together with a lithium compound in a sintering step.

4. An electrode for a lithium secondary battery comprising the positive active material for a lithium secondary battery according to claim 1.

5. A lithium secondary battery comprising the electrode for a lithium secondary battery according to claim 4.

## Patentansprüche

1. Positives Aktivmaterial für eine Lithium-Sekundärbatterie mit einem Lithium-Übergangsmetall-Kompositoxid mit einer α-NaFeO₂-Typ-Kristallstruktur und wiedergegeben durch die Formel Li_{1+α}Me_{1-α}O₂ (wobei Me ein Übergangsmetall einschließlich Co, Ni und Mn ist und (1 + α)/(1 - a) = 1,25 bis 1,4), wobei das positive Aktivmaterial 1900 Gewichts-ppm bis 6000 Gewichts-ppm Na enthält und bei einer Teilchengrößen-Verteilungsmessung eine 50%-Teilchengröße (D50) von 5 µm oder weniger aufweist.

2. Verfahren zum Herstellen des positiven Aktivmaterials für eine Lithium-Sekundärbatterie nach Anspruch 1, wobei ein Vorläufer für die Synthese des Lithium-Übergangsmetall-Kompositoxids ein Hydroxid eines Übergangsmetalls ist, das Co, Ni und Mn enthält.

3. Verfahren zum Herstellen eines positiven Aktivmaterials für eine Lithium-Sekundärbatterie nach Anspruch 2, wobei für die Synthese des Lithium-Übergangsmetall-Kompositoxids der Hydroxid-Vorläufer des Übergangsmetalls, das Co, Ni und Mn enthält, mit einer Natrium-Verbindung zusammen mit einer LithiumVerbindung in einem Sinterschritt vermischt wird.

4. Elektrode für eine Lithium-Sekundärbatterie, die das positive Aktivmaterial für eine Lithium-Sekundärbatterie nach Anspruch 1 aufweist.

5. Lithium-Sekundärbatterie mit der Elektrode für eine Lithium-Sekundärbatterie nach Anspruch 4.

## Revendications

1. Matériau actif positif pour batterie secondaire au lithium comprenant un oxyde composite de métal de transition de lithium ayant une structure cristalline de type α-NaFeO₂ et représenté par la formule de composition de Li_{1+α}Me_{1-α}O₂ (Me est un métal de transition incluant du Co, du Ni et du Mn et (1 + α)/(1 - α) vaut 1,25 à 1,4), dans lequel le matériau actif positif contient du Na dans une quantité de 1 900 ppm à 6 000 ppm en masse, et a une taille de particules à 50 % (D50) de 5 µm ou moins dans une mesure de distribution de taille de particules.

2. Procédé de production du matériau actif positif pour batterie secondaire au lithium selon la revendication 1, dans lequel un précurseur pour la synthèse de l'oxyde composite de métal de transition de lithium est un hydroxyde d'un métal de transition incluant du Co, du Ni et du Mn.

3. Procédé de production d'un matériau actif positif pour batterie secondaire au lithium selon la revendication 2, dans lequel pour la synthèse de l'oxyde composite de métal de transition de lithium, le précurseur d'hydroxyde du métal de transition incluant du Co, du NI et du Mn est mélangé avec un composé de sodium conjointement avec un composé de lithium dans une étape de frittage.

4. Electrode pour batterie secondaire au lithium comprenant le matériau actif positif pour batterie secondaire au lithium selon la revendication 1.

5. Batterie secondaire au lithium comprenant l'électrode pour batterie secondaire au lithium selon la revendication 4.
